# EUROPEAN PATENT SPECIFICATION

(11) **EP 2 409 876 B1**
(45) Date of publication and mention of the grant of the patent: **20.03.2013**
(21) Application number: 11174042.9
(22) Date of filing: 14.07.2011
(51) Int. Cl.: B60N 2/28, B60R 22/10

(54) **Belt fixing device for child seat and automobile child seat including the same**
Gurtbefestigungsvorrichtung für einen Kindersitz und Autokindersitz damit
Dispositif de fixation de ceinture pour siège enfant et siège enfant d'automobile l'incluant

(30) Priority: 20.07.2010 JP 2010162910
(43) Date of publication of application: 25.01.2012
(73) Proprietor: Aprica Children's Products Inc., Chuo-ku, Osaka-shi Osaka 542-0082 (JP)
(72) Inventor: Kawano, Haruo, Osaka-shi, Osaka 542-0082 (JP)
(74) Representative: Prüfer & Partner GbR European Patent Attorneys

(56) References cited:
- WO-A2-2007/103641
- JP-A- 2002 301 964
- US-A- 3 325 213
- US-A- 3 825 979
- US-A- 5 398 997
- US-A1- 2009 183 348

## Description

### BACKGROUND OF THE INVENTION

### Field of the Invention

The present invention relates to fixing devices for attaching and fixing an automobile child seat to a seat in a passenger car by using a seat belt of the passenger car.

### Description of the Background Art

Child seats are widely used as children's seats in vehicles, which are capable of ensuring safety of infants in passenger cars and providing a more comfortable ride for the infants. Conventionally, a lock-off device as described in, e.g., Japanese Patent Publication No. 2002-301964 of unexamined applications is known as means for attaching and fixing such a child seat, placed on a vehicle seat in a passenger car, to the seat so that the child seat is not separated from the seat. The lock-off device described in Japanese Patent Publication No. 2002-301964 of unexamined applications is provided on the right and left sides of a base that is placed on the vehicle seat. One of the right and left lock-off devices holds a shoulder belt of a seat belt, which extends obliquely.

However, such a conventional child seat has the following problem as it includes the two lock-off devices, and the right lock-off device is used when installing the child seat on a right seat in a vehicle, whereas the left lock-off device is used when installing the child seat on a left seat in the vehicle. That is, only one of the right and left lock-off devices is used, and the other lock-off device is not used. Thus, the other lock-off device is wasted, which increases the number of parts, and thus increases the cost.

Moreover, the user may use the wrong lock-off device. In this case, the child seat cannot be appropriately attached and fixed to a vehicle seat in a passenger car.

### SUMMARY OF THE INVENTION

In view of the above problems, it is an object of the present invention to provide an advantageous technique capable of reducing the number of parts, and of eliminating the possibility that a child seat may be attached to a vehicle by a wrong method.

In order to achieve the above object, a belt fixing device for a child seat according to the present invention, which is defined by the technical features set forth in claim 1, is a belt fixing device for a child seat, used in the child seat that is installed on a vehicle seat, for guiding and fixing a seat belt provided in the vehicle. The belt fixing device includes: a fixing plate; a cover plate covering the fixing plate so as to be able to open and close, for sandwiching the seat belt between the cover plate itself and the fixing plate; a first belt passage extending from upper left to lower right between the fixing plate and the cover plate; a second belt passage extending from upper right to lower left between the fixing plate and the cover plate; a first lock member supported by the fixing plate in the first belt passage, for allowing movement of the seat belt, guided along the first belt passage, in an upper left direction, and restricting movement of the seat belt in a lower right direction; and a second lock member supported by the fixing plate in the second belt passage, for allowing movement of the seat belt, guided along the second belt passage, in an upper right direction, and restricting movement of the seat belt in a lower left direction.

According to the present invention, the fixing plate and the cover plate guide and fix a seat belt extending obliquely from upper left to lower right, and also guide and fix a seat belt extending obliquely from upper right to lower left. Thus, the common fixing plate and the common cover plate can be used to guide and fix the seat belt in both cases where the belt extends obliquely to lower right and to lower left, whereby the number of belt fixing devices can be reduced to one. Accordingly, the number of parts is reduced as compared to related art, which is advantageous in terms of cost.

The present invention has two lock members functioning as a one-way lock. The position of the first lock member is not particularly limited. The first lock member may be provided on the lower right side of the fixing plate, and in one embodiment, may be provided on the upper left side of the fixing plate. The position of the second lock member is not particularly limited. The second lock member may be provided on the lower left side of the fixing plate, and in one embodiment, may be provided on the upper right side of the fixing plate. According to this embodiment, in the case where the belt extends obliquely from upper left to lower right, only the first lock member contacts the seat belt and restricts movement of the seat belt in the lower right direction, and the second lock member does not contact the belt. On the other hand, in the case where the belt extends obliquely from upper right to lower left, only the second lock member contacts the seat belt and restricts movement of the belt in the lower left direction, and the first lock member does not contact the belt. Thus, the function of the one-way lock can be reliably implemented.

The cover plate is not particularly limited as long as it covers the fixing plate so as to be able to open and close. The seat belt is fixed by opening the cover plate, passing a shoulder belt of the seat belt between the fixing plate and the cover plate, and closing the cover plate to sandwich the shoulder belt between the cover plate and the fixing plate. The cover plate securely covers the fixing plate, and reliably fixes the seat belt. Means for coupling the cover plate with the fixing plate is not particularly limited. However, for example, it is preferable that the cover plate be pivotally supported on its upper side by the fixing plate, and have, on its lower side, a fastening member capable of being latched to the fixing plate. Alternatively, the cover plate may be pivotally supported on its lower side by the fixing plate, and have, on its upper side, a fastening member capable of being latched to the fixing plate. According to this embodiment, in the case where the fastening member is not latched to the fixing plate, the cover plate can pivot downward and open due to its own weight. Thus, the operator easily knows if the fastening member is latched or not. Moreover, by disengaging the fastening member to open the cover plate, the cover plate pivots downward about a pivot axis due to its own weight. This facilitates the operation of passing the shoulder belt across the fixing plate.

An automobile child seat according to the present invention as defined in claim 4 includes: a seat main body on which an infant sits; a base member for supporting the seat main body; the belt fixing device provided in a middle in a lateral direction of the seat main body or the base member, for guiding and fixing a shoulder belt of a seat belt; and a receiving guide provided on right and left sides of the base member, for receiving a lap belt of the seat belt.

According to the present invention, the belt fixing device for the child seat is provided in the middle in the lateral direction of the seat main body or the base member. Thus, by fixing the seat belt to the belt fixing device, the child seat can be attached to a seat in a vehicle in a bilaterally symmetrical manner, and fixed to the seat. Accordingly, the seat belt can be stably attached and fixed in both cases where the belt extends obliquely in a lower right direction and in a lower left direction.

As described above, the belt fixing device for the child seat according to the present invention has the first belt passage extending from upper left to lower right between the fixing plate and the cover plate, and the second belt passage extending from upper right to lower left between the fixing plate and the cover plate. Thus, the seat belt can be fixed by the single belt fixing device whether the child seat is attached and fixed to a right seat or a left seat in a vehicle. Accordingly, no belt fixing device is left unused as in conventional examples, and the number of parts can be reduced. Moreover, since two belt fixing devices are not provided, the possibility of wrong use can be eliminated.

### BRIEF DESCRIPTION OF THE DRAWINGS

Fig. 1 is an exploded perspective view showing a child seat including a belt fixing device for the child seat according to an embodiment of the present invention.
Fig. 2 is a perspective view showing the belt fixing device according to the embodiment.
Fig. 3 is a perspective view showing a state in which the belt fixing device of the embodiment is opened.
Fig. 4 is a perspective view showing a fixing plate of the belt fixing device.
Fig. 5 is a perspective view showing a lock member.
Fig. 6 is a cross-sectional view taken along line VI-VI in Fig. 2.
Fig. 7 is a cross-sectional view taken along line VII-VII in Fig. 2.
Fig. 8 is a front view showing a state in which a belt is passed through the belt fixing device from upper right to lower left.
Fig. 9 is a front view showing a state in which a belt is passed through the belt fixing device from upper left to lower right.

### DESCRIPTION OF THE EMBODIMENT

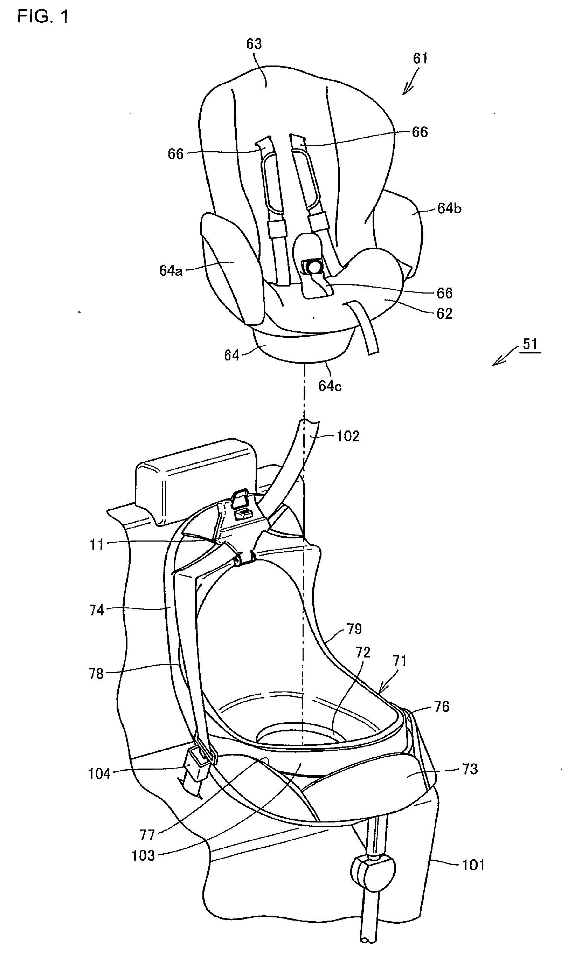

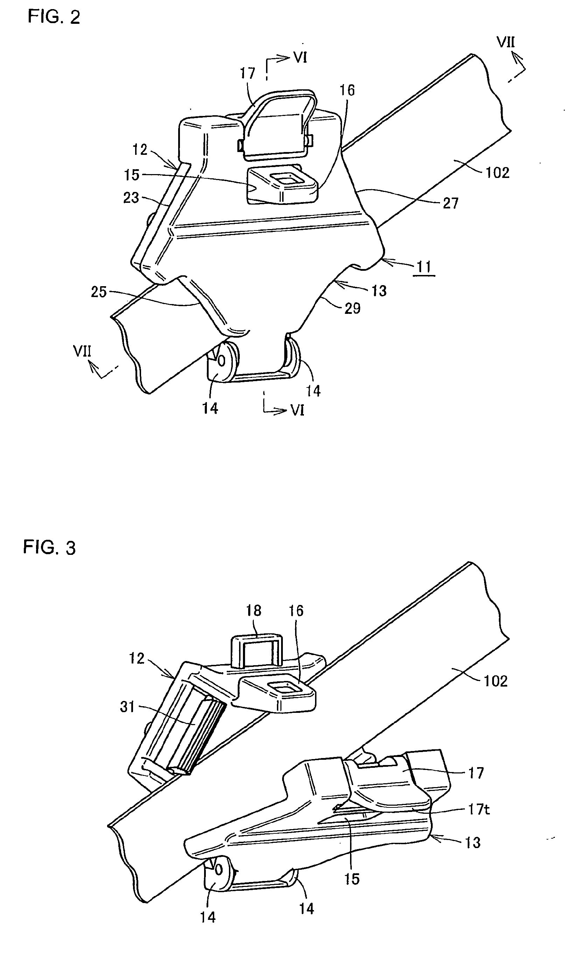

An embodiment of the present invention will be described in detail below with reference to the accompanying drawings. Fig. 1 is an exploded perspective view showing a child seat including a belt fixing device for the child seat according to an embodiment of the present invention. Fig. 2 is a perspective view of the belt fixing device according to the embodiment.

A child seat 51 of the present invention includes a seat main body 61 on which an infant sits, a base member 71 for supporting the seat main body 61, a belt fixing device 11 provided in the middle in a lateral direction of the base member 71, and receiving guides 76, 77 provided on the right and left sides of the base member 71, for receiving a lap belt 103 of a seat belt.

The seat main body 61 has a seating portion 62 extending substantially in a horizontal direction, for supporting the bottom of an infant who sits on the child seat, a backrest portion 63 extending upward from a rear end of the seating portion 62, for supporting the back of the infant, and a seat base 64 for supporting the seating portion 62 and the backrest portion 63. A cushion material is provided on a seating face of the seating portion 62 and a backrest face of the backrest portion 63 to provide a comfortable ride for the infant sitting on the child seat. The backrest portion 63 is reclinable, and can be reclined to a substantially horizontal position to form a bed. A restraint belt 66 for restraining the infant sitting on the child seat is connected to the seating face of the seating portion 62 and the backrest face of the backrest portion 63.

The seat base 64 has side wall portions 64a, 64b on its right and left sides. The seating portion 62 and the backrest portion 63 are held between the side wall portions 64a, 64b. A lower part 64c of the seat base 64 is a circular pedestal, and is surrounded by the base member 71.

The base member 71 is formed by a member having high strength, such as fiber reinforced plastic (FRP) or rigid plastic, and has a base portion 73 having a circular recess 72 in its center, and a rear wall portion 74 extending upward from a rear end of the base portion 73. Thus, the base member 71 is formed in an "L" shape as viewed from the outside in the lateral direction (the left side in Fig. 1). The base portion 73 is placed on a vehicle seat 101. The recess 72 occupies the central portion of the base 73. The recess 72 receives the circular pedestal 64c of the seat base 64, and relatively rotatably supports the seat base 64. Thus, the seat main body 61 is pivotable about an axis shown by a chain line in Fig. 1.

The receiving guides 76, 77 for receiving the lap belt 103 of the seat belt are provided in left and right side portions of the base portion 73. The receiving guides 76, 77 are grooves shaped in a bilaterally symmetrical manner and extending along the outer periphery of the recess 72. In the embodiment of Fig. 1, a groove continuously extends from the left side portion (the receiving guide 76) of the base portion 73 to the right side portion (the receiving guide 77) of the base portion 73 via a front end of the base portion 73. Thus, the receiving guide 76 is continuous with the receiving guide 77, and the receiving guides 76, 77 reliably hold substantially the entire lap belt 103.

The rear wall portion 74 has guides 78, 79 for receiving a shoulder belt 102 of the seat belt, and the belt fixing device 11 for sandwiching and fixing the shoulder belt 102. The receiving guide 78 is a groove formed along a left side edge of the rear wall portion 74. The receiving guide 79 is a groove formed along a right side edge of the rear wall portion 74. These receiving guides 78, 79 are shaped in a bilaterally symmetrical manner.

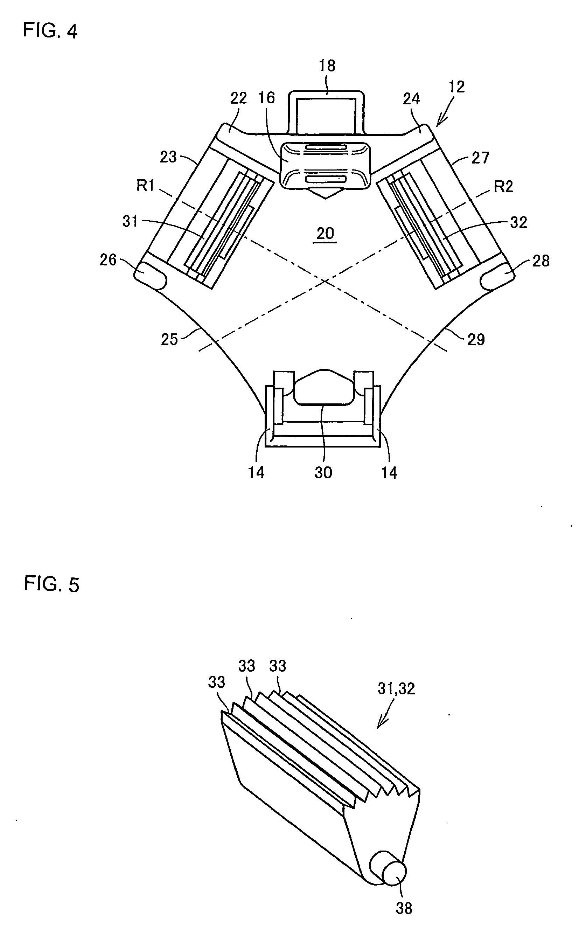

As shown in Fig. 1, the receiving guide 78 receives the shoulder belt 102 extending from a buckle 104 located at a lower left part of the rear wall portion 74, toward an upper right part of the rear wall portion 74, and guides the shoulder belt 102 along the left side edge of the rear wall portion 74. The receiving guide 78 further guides the shoulder belt 102 so that the shoulder belt 102 extends obliquely from an upper end of the receiving guide 78 in an upper right direction. The upper end of the receiving guide 78 guides the shoulder belt 102 so that a face of the shoulder belt 102 is aligned with a flat portion 20 (Fig. 4) of the belt fixing device 11 described below.

The receiving guide 79 provided bilaterally symmetrically with the receiving guide 78 is structured in a manner similar to that described above. Although not shown in the figures, the receiving guide 79 receives a shoulder belt extending from a lower right part of the rear wall portion 74 toward an upper left part thereof, and guides the shoulder belt along the right side edge of the rear wall portion 74. The receiving guide 79 further guides the shoulder belt so that the shoulder belt extends obliquely from an upper end of the receiving guide 79 in an upper left direction. The upper end of the receiving guide 79 guides the shoulder belt so that a face of the shoulder belt is aligned with the flat portion 20 (Fig. 4) of the belt fixing device 11 described below.

A back face of the rear wall portion 74 contacts a backrest face of the vehicle seat 101. The belt fixing device 11 is placed in the middle in the lateral direction on an upper end of a front face of the rear wall portion 74. Note that although not shown in the figures, the belt fixing device 11 may be fixed to the middle in the lateral direction on a back face of the backrest portion 63.

The belt fixing device 11 is fixed to the upper end of the rear wall portion 74, and is not pivoted or displaced with respect to the base member 71. Referring to Fig. 2, the belt fixing device 11 has a fixing plate 12, and a cover plate 13 that covers the fixing plate 12 to sandwich the belt between the cover plate 13 itself and the fixing plate 12. Since the fixing plate 12 and the cover plate 13 have substantially the same shape, the cover plate 13 can cover the fixing plate 12 in a preferable manner.

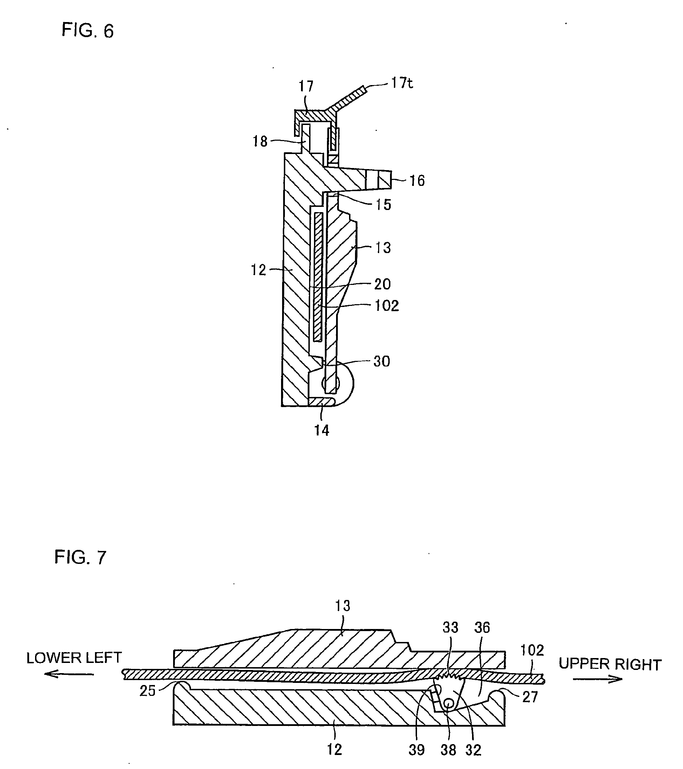

Fig. 3 is a perspective view showing a state in which the cover plate 13 is opened. Fig. 4 is a front view showing the fixing plate 12. Fig. 5 is a perspective view showing a lock member. Fig. 6 is a cross-sectional view taken along line VI-VI in Fig. 2. Fig. 7 is a cross-sectional view taken along line VII-VII in Fig. 2. A protrusion 16 protruding forward and a pawl 18 protruding upward are provided at an upper end of the fixing plate 12. A pair of right and left brackets 14 are provided at a lower end of the fixing plate 12. The cover plate 13 has pivotally supported at its lower end by the brackets 14, and the cover plate 13 is opened and closed as the upper end side of the cover plate 13 moves toward and away from the upper end of the fixing plate 12. A through hole 15 and a fastening member 17 are provided at the upper end of the cover plate 13. The through hole 15 is located below the fastening member 17. With the cover plate 13 covering the fixing plate 12, the protrusion 16 protruding forward from the fixing plate 12 extends through the through hole 15.

The fastening member 17 is pivotally attached to the upper end of the cover plate 13. With the cover plate 13 covering the fixing plate 12, the fastening member 17 can be latched to the pawl 18 protruding upward from the fixing plate 12. When the fastening member 17 is pressed rearward and latched to the pawl 18, the cover plate 13 is not allowed to pivot, and thus will not be opened. On the other hand, when the fastening member 17 is lifted up forward and disengaged from the pawl 18, the cover plate 13 is allowed to pivot, and can be tilted forward and opened. The fastening member 17 has a tongue piece 17t protruding forward to upward from the fastening member 17. The operator can easily press or lifts up the fastening member 17 by operating the tongue piece 17t with his/her finger.

The fixing plate 12 has, between its upper and lower ends, the flat portion 20 for receiving the shoulder belt 102 of the seat belt. Ridges 22, 24, 26, 28, 30 are formed to surround the flat portion 20. The ridge 22 is provided at the upper end of the fixing plate 12, and extends in an upper left direction from the middle in the lateral direction in Fig. 4. The ridge 24 is provided at the upper end of the fixing plate 12, and extends in an upper right direction from the middle in the lateral direction in Fig. 4. Thus, the ridges 22, 24 are arranged in a "V" shape, and the protrusion 16 is provided between the ridges 22, 24. The ridge 26 extending parallel to the ridge 22 is provided on the lower left side of the ridge 22. The ridges 22, 26 are separated from each other by an amount corresponding to a predetermined width dimension of the seat belt. With the cover plate 13 being closed, the ridges 22, 26 support the cover plate 13, and an upper left opening 23 is formed between the ridges 22, 26.

The ridge 30 is provided in the middle in the lateral direction in the lower end of the fixing plate 12, and extends in the lateral direction between the pair of brackets 14, 14. The ridges 30, 26 are separated from each other by the amount corresponding to the predetermined width dimension of the seat belt. With the cover plate 13 being closed, the ridges 30, 26 support the cover plate 13, and a lower left opening 25 is formed between the ridges 30, 26.

The ridge 28 extending parallel to the ridge 24 is provided on the lower right side of the ridge 24. The ridges 24, 28 are separated from each other by the amount corresponding to the predetermined width dimension of the seat belt. With the cover plate 13 being closed, the ridges 24, 28 support the cover plate 13, and an upper right opening 27 is formed between the ridges 24, 28. With the cover plate 13 being closed, the ridges 30, 28 support the cover plate 13, and a lower right opening 29 is formed between the ridges 30, 28.

Thus, the ridges 22, 24 are arranged in a bilaterally symmetrical manner, the ridges 26, 28 are arranged in a bilaterally symmetrical manner, and the ridge 30 is placed in the middle in the lateral direction. Thus, the upper left opening 23 and the upper right opening 27 have a bilaterally symmetrical positional relation, and the lower left opening 25 and the lower right opening 29 have a bilaterally symmetrical positional relation.

An upper edge of the fixing plate 12 on which the pawl 18 is provided, and an upper edge of the cover plate 13 on which the fastening member 17 is provided form a horizontal side extending in the lateral direction. An oblique side forming the upper left opening 23 and an oblique side forming the upper right opening 27 extend obliquely downward from near left and right ends of the upper edges of the fixing plate 12 and the cover plate 13 so that the distance between the oblique sides gradually increases as they extend downward. An oblique side forming the lower left opening 25 and an oblique side forming the lower right opening 29 extend obliquely downward from near lower ends of the upper left opening 23 and the upper right opening 27 so that the distance between the oblique sides gradually decreases as they extend downward. The brackets 14 are provided near lower ends of the lower left opening 25 and the lower right opening 29. The fixing plate 12 and the cover plate 13 have the horizontal side and the four oblique sides as described above, and thus are formed in a shape like a pentagon that is bilaterally symmetrical as viewed from the front.

The upper left opening 23, the portion between the ridges 22, 26, the portion between the ridges 28, 30, and the lower right opening 29 form a first belt passage R1 extending from upper left toward lower right between the fixing plate 12 and the cover plate 13 in Fig. 4.

The upper right opening 27, the portion between the ridges 24, 28, the portion between the ridges 26, 30, and the lower left opening 25 form a second belt passage R2 extending from upper right toward lower left between the fixing plate 12 and the cover plate 13 in Fig. 4.

The fixing plate 12 is provided with a first lock member 31 at a position adjacent to the upper left opening 23. Similarly, the fixing plate 12 is provided with a second lock member 32 at a position adjacent to the upper right opening 27. The lock members 31, 32 have a one-way cam mechanism that presses the belt from the side of the fixing plate 11 against the cover plate 13 and restricts movement of the belt to one side in an extending direction of the belt, while allowing movement of the belt to the other side in the extending direction of the belt. Specifically, the lock members 31, 32 are substantially cylindrical members having a length dimension corresponding to the predetermined width of the belt.

Referring to Fig. 5, the first lock member 31 and the second lock member 32 have the same shape, and have a length corresponding to the seat belt of the predetermined width. The first lock member 31 and the second lock member 32 have shaft portions 38 protruding from both longitudinal ends thereof. The lock members 31, 32 are supported to be swingable about an imaginary straight line connecting the shaft portions 38 at both ends as an axis. The lock members 31, 32 have a cylindrical surface about the axis, and a plurality of longitudinal grooves 33 are formed in the cylindrical surface. The lock members 31, 32 have a substantially sector shape that widens from the shaft 38 toward the longitudinal grooves 33, as viewed in the longitudinal direction.

Referring to Fig. 7, a recess 36 is formed in the fixing plate 12. The recess 36 accommodates the lock member 32. The shafts 38 at both ends of the lock member 32 engage with side walls of the recess 36 to prevent the lock member 32 from coming off from the recess 36. Of the side walls of the recess 36, a side wall 39 located farther from the upper right opening 27 abuts on the lock member 32 as described below.

The lock member 32 is swingably attached to the fixing plate 12, and as shown in Fig. 7, can take a standing posture in which the lock member 32 swings in a direction away from the upper right opening 27 and stands so that the longitudinal grooves 33 face the cover plate 13, and although not shown in the figures, a tilted posture in which the lock member 32 swings in a direction toward the upper right opening 27 and is tilted so as to increase the gap between the longitudinal grooves 33 and the cover plate 13.

The shoulder belt 102 of the seat belt is sandwiched between the fixing plate 12 and the cover plate 13, and is guided in the second belt passage R2, and the fastening member 17 is latched to the pawl 18. In this state, the second lock member 32 functions as a one-way lock. If the belt 102 is pulled in the upper right direction shown by an arrow in Fig. 7, the lock member 32 is tilted by the belt 102 to take the tilted posture, and the longitudinal grooves 33 are separated from the shoulder belt 102. Thus, the shoulder belt 102 is not subjected to the pressing force of the lock member 32, and can move in the upper right direction. Thus, the shoulder belt 102 can be pulled in the upper right direction to eliminate loosening of the shoulder and lap belts 102, 103 placed around the child seat 51.

On the other hand, if the shoulder belt 102 is pulled in the lower left direction shown by an arrow in Fig. 7, the lock member 32 is lifted up by the shoulder belt 102 to take the standing posture, and the shoulder belt 102 is pressed between the longitudinal grooves 33 and the cover plate 13. Moreover, the lock member 32 abuts on the side wall 39 of the recess 36 and maintains its standing posture, and the longitudinal grooves 33 bite into the shoulder belt 102, thereby restricting movement of the shoulder belt 102 in the lower left direction. This prevents the shoulder and lap belts 102, 103, which have been tightly placed around the child seat 51, from becoming loose again. The same applies to the first lock member 31. Although not shown in the figures, the first lock member 31 is formed similarly.

Thus, the lock members 31, 32 form a one-way lock mechanism which restricts movement of the shoulder belt in the lower right direction and allows movement thereof in the upper left direction in the case where the shoulder belt extends obliquely from upper left to lower right, and which restricts movement of the shoulder belt 102 in the lower left direction and allows movement thereof in the upper right direction in the case where the shoulder belt 102 extends obliquely from upper right to lower left.

An example in which the child seat 51 is attached and fixed to a right vehicle seat as viewed from the front of the vehicle looking rearward will be described below with reference to Figs. 1 to 3 and 8. The seat belt of the vehicle includes the shoulder belt 102 extending from upper right to lower left, the lap belt 103 extending in the lateral direction, and the buckle 104 which is provided between the shoulder belt 102 and the lap belt 103 and through which the seat belt is passed. The shoulder belt 102 is placed around the rear wall portion 74, and the lap belt 103 is placed around the base portion 73, whereby the child seat 51 is attached and fixed to the vehicle seat.

In the case where the shoulder belt 102 is passed from upper right to lower left through the belt fixing device 11, the shoulder belt 102 passes through the upper right opening 27 and the lower left opening 25, and overlaps the second lock member 32. With the cover plate 13 being closed, the second lock member 32 contacts the shoulder belt 102 extending obliquely from upper right to lower left, thereby restricting movement of the shoulder belt 102 in the lower left direction and allowing movement thereof in the upper right direction.

According to the present embodiment, in the case where the child seat 51 is installed on the right seat 101 in the vehicle, the shoulder belt 102, passing through the child seat belt fixing device 11, can be pulled in the upper right direction to fasten the child seat 51. Thus, the child seat 51 can be tightly attached and fixed to the vehicle seat 51. Since the first lock member 31 is provided on the upper left side of the fixing plate 12, the first lock member 31 is located away from the shoulder belt 102 extending obliquely from upper right to lower left. Thus, the fist lock member 31 does not interfere with the shoulder belt 102 when moving the shoulder belt 102 in the upper right direction to fasten the child seat 51.

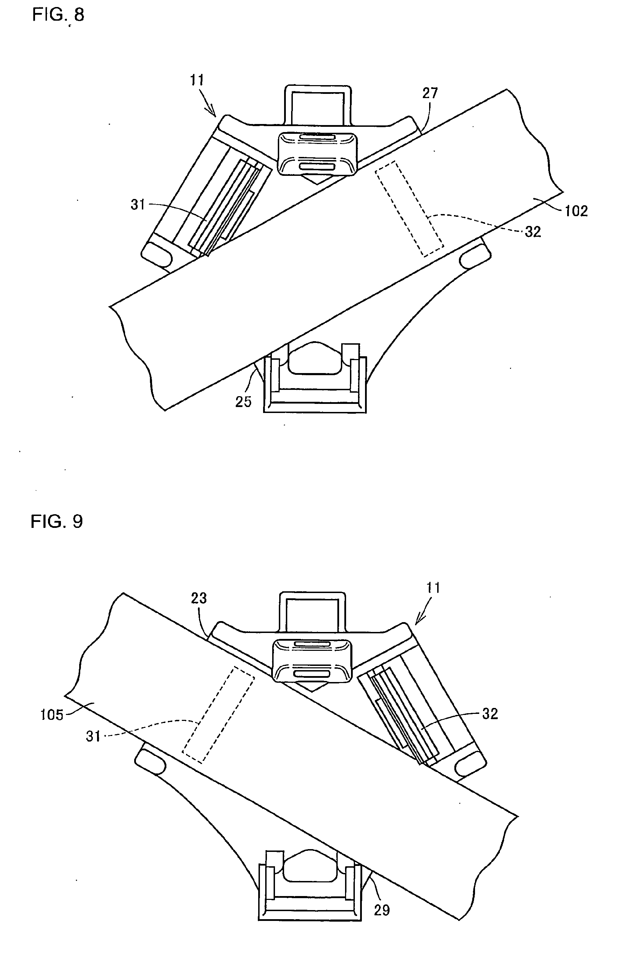

An example in which the child seat 51 is attached and fixed to a left seat in the vehicle as viewed from the front of the vehicle looking rearward will be described with reference to Fig. 9. In this case, a shoulder belt 105 of the seat belt extends obliquely from upper left to lower right. Thus, the shoulder belt 105 passes through the upper left opening 23 and the lower right opening 29, and overlaps the first lock member 31. With the cover plate 13 being closed, the first lock member 31 contacts the shoulder belt 105 extending obliquely from upper left to lower right, thereby restricting movement of the shoulder belt 105 in the lower right direction and allowing movement thereof in the upper left direction.

According to the present embodiment, in the case where the child seat 51 is installed on the left seat in the vehicle, the shoulder belt 105, passing through the belt fixing device 11, can be pulled in the upper left direction to fasten the child seat 51. Thus, the child seat 51 can be tightly attached and fixed to the vehicle seat. Since the second lock member 32 is provided on the upper right side of the fixing plate 12, the second lock member 32 is located away from the shoulder belt 105 extending obliquely from upper left to lower right. Thus, the second lock member 32 does not interfere with the shoulder belt 105 when moving the shoulder belt 105 in the upper left direction to fasten the child seat 51.

As described above, according to the present invention, the single belt fixing device 11 for the child seat, which is provided in the middle in the lateral direction, can be used in both cases where the shoulder belt extending obliquely is passed from upper left and from upper right. Thus, the number of parts is reduced as compared to conventional examples, which is advantageous in terms of the cost. Since two child seat belt fixing devices are not provided, the possibility of wrong use can be eliminated. Moreover, since the shoulder belt fixes the middle in the lateral direction of the child seat 51, the child seat is stable against both a lateral force generated when the vehicle turns left and a lateral force generated when the vehicle turns right.

Although the embodiment of the present invention is described above with reference to the drawings, the present invention is not limited to the illustrated embodiment. Various modifications and variations can be made to the illustrated embodiment within the scope of the present invention.

The belt fixing device for the car seat according to the present invention is advantageously used in child seat devices that are installed on a seat in a vehicle such as a passenger car.

## Claims

1. A belt fixing device (11) for a child seat, used in said child seat that is put on a seat in a vehicle, for fixing said child seat on said vehicle seat by guiding and fixing a seat belt provided in said vehicle, comprising:
a fixing plate (12);
a cover plate (13) covering said fixing plate (12) so as to be able to open and close, for sandwiching said seat belt between said cover plate itself and said fixing plate;
a first belt passage (R1) extending from upper left to lower right between said fixing plate (12) and said cover plate (13);
a second belt passage (R2) extending from upper right to lower left between said fixing plate (12) and said cover plate (13);
a first lock member (31) supported by said fixing plate (12) in said first belt passage (R1), for allowing movement of said seat belt, guided along said first belt passage (R1), in an upper left direction, and restricting movement of said seat belt in a lower right direction; and
a second lock member (32) supported by said fixing plate (12) in said second belt passage (R2), for allowing movement of said seat belt, guided along said second belt passage (R2), in an upper right direction, and restricting movement of said seat belt in a lower left direction.

2. The belt fixing device (11) according to claim 1, wherein
said first lock member (31) is provided on an upper left side of said fixing plate (12), and
said second lock member (32) is provided on an upper right side of said fixing plate (12).

3. The belt fixing device 11 according to claim 1 or 2, wherein
said cover plate (13) is pivotally supported on its lower side by said fixing plate (13), and has, on its upper side, a fastening member (17) capable of being latched to said fixing plate (12).

4. An automobile child seat, comprising:
a seat main body (61) on which an infant sits;
a base member (71) for supporting said seat main body (61);
said belt fixing device (11) according to any one of claims 1 to 3, provided in a middle in a lateral direction of said seat main body (61) or said base member (71), for guiding and fixing a shoulder belt of a seat belt; and
a receiving guide (76, 77) provided on right and left sides of said base member (71), for receiving a lap belt (103) of said seat belt.

## Patentansprüche

1. Eine Gurtfixiervorrichtung (11) für einen Kindersitz, welche in dem auf einem Sitz in einem Fahrzeug gesetzten Kindersitz verwendet wird, zum Fixieren des Kindersitzes auf dem Fahrzeugsitz mittels Führens und Fixierens eines in dem Fahrzeug vorgesehenen Sitzgurtes, umfassend:
eine Fixierplatte (12);
eine Deckplatte (13), welche die Fixierplatte (12) so bedeckt, dass sie sich öffnen und schließen kann, um den Sitzgurt zwischen der Deckplatte selbst und der Fixierplatte aufzunehmen;
einen ersten Gurtdurchlass (R1), der sich von oben links nach unten rechts zwischen der Fixierplatte (12) und der Deckplatte (13) erstreckt;
einen zweiten Gurtdurchlass (R2), der sich von oben rechts nach unten links zwischen der Fixierplatte (12) und der Deckplatte (13) erstreckt;
ein erstes Verschlusselement (31), das von der Fixierplatte (12) in dem ersten Gurtdurchlass (R1) gelagert ist, um eine Bewegung des entlang dem ersten Gurtdurchlasses (R1) geführten Sitzgurtes in einer Richtung nach oben links zu erlauben, und um eine Bewegung des Sitzgurtes in einer Richtung nach unten rechts zu verhindern; und
ein zweites Verschlusselement (32), das von der Fixierplatte (12) in dem zweiten Gurtdurchlass (R2) gelagert ist, um eine Bewegung des entlang dem zweiten Gurtdurchlass (R2) geführten Sitzgurtes in einer Richtung nach oben rechts zu ermöglichen, und um eine Bewegung des Sitzgurtes in einer Richtung nach unten links zu verhindern.

2. Die Gurtfixiervorrichtung (11) gemäß Anspruch 1, wobei
das erste Verschlusselement (31) auf einer Seite oben links der Fixierplatte (12) vorgesehen ist, und
das zweite Verschlusselement (32) auf einer Seite oben rechts der Fixierplatte (12) vorgesehen ist.

3. Die Gurtfixiervorrichtung (11) gemäß Anspruch 1 oder 2, wobei
die Deckplatte (13) schwenkbar an ihrer unteren Seite an der Fixierplatte (13) gelagert ist, und auf ihrer oberen Seite ein Befestigungselement (17) besitzt, das in der Lage ist, auf die Fixierplatte (12) einzurasten.

4. Ein Automobilkindersitz, umfassend:
einen Sitzhauptkörper (61), auf welchem ein Kind sitzt;
ein Sockelelement (71) zum Halten des Sitzhauptkörpers (61);
die Gurtfixiervorrichtung (11) gemäß einem der Ansprüche 1 bis 3, die in einer Mitte in einer seitlichen Richtung des Sitzhauptkörpers (61) oder des Sockelelements (71) vorgesehen ist, um einen Schultergurt eines Sitzgurts zu führen und zu fixieren; und
eine Aufnahmeführung (76, 77), die auf der rechten und der linken Seite des Sockelelements (71) vorgesehen ist, um einen Beckengurt (103) des Sitzgurtes aufzunehmen.

## Revendications

1. Dispositif de fixation de ceinture (11) pour un siège enfant, utilisé dans ledit siège enfant qui est placé sur un siège dans un véhicule, pour fixer ledit siège enfant sur ledit siège de véhicule en guidant et en fixant une ceinture de sécurité prévue dans ledit véhicule, comprenant :
une plaque de fixation (12) ;
une plaque formant couvercle (13) recouvrant ladite plaque de fixation (12) afin de pouvoir s'ouvrir et se fermer, pour prendre en sandwich ladite ceinture de sécurité entre ladite plaque formant couvercle elle-même et ladite plaque de fixation ;
un premier passage de ceinture (R1) s'étendant de la partie supérieure gauche à la partie inférieure droite entre ladite plaque de fixation (12) et ladite plaque formant couvercle (13) ;
un second passage de ceinture (R2) s'étendant de la partie supérieure droite à la partie inférieure gauche entre ladite plaque de fixation (12) et ladite plaque formant couvercle (13) ;
un premier élément de blocage (31) supporté par ladite plaque de fixation (12) dans ledit premier passage de ceinture (R1), pour permettre le déplacement de ladite ceinture de sécurité, guidée le long dudit premier passage de ceinture (R1), dans une direction supérieure gauche, et limitant le déplacement de ladite ceinture de sécurité dans une direction inférieure droite ; et
un second élément de blocage (32) supporté par ladite plaque de fixation (12) dans ledit second passage de ceinture (R2), pour permettre le déplacement de ladite ceinture de sécurité, guidée le long dudit second passage de ceinture (R2) dans une direction supérieure droite, et limitant le déplacement de ladite ceinture de sécurité dans une direction inférieure gauche.

2. Dispositif de fixation de ceinture (11) selon la revendication 1, dans lequel
ledit premier élément de blocage (31) est prévu sur un côté supérieur gauche de ladite plaque de fixation (12), et
ledit second élément de blocage (32) est prévu sur un côté supérieur droit de ladite plaque de fixation (12).

3. Dispositif de fixation de ceinture (11) selon la revendication 1 ou 2, dans lequel
ladite plaque formant couvercle (13) est supportée de manière pivotante sur son côté inférieur par ladite plaque de fixation (13), et a, sur son côté supérieur, un élément de fixation (17) pouvant être verrouillé sur ladite plaque de fixation (12).

4. Siège enfant pour automobile, comprenant :
un corps principal de siège (61) sur lequel un enfant s'assoit ;
un élément de base (71) pour supporter ledit corps principal de siège (61);
ledit dispositif de fixation de ceinture (11) selon l'une quelconque des revendications 1 à 3, prévu au milieu d'une direction latérale dudit corps principal de siège (61) ou dudit élément de base (71), pour guider et fixer une ceinture d'épaule d'une ceinture de sécurité ; et
un guide de réception (76, 77) prévu sur les côtés droit et gauche dudit élément de base (71), pour recevoir une ceinture ventrale (103) de ladite ceinture de sécurité.
